# EUROPEAN PATENT APPLICATION

(11) **EP 4 575 736 A1**
(43) Date of publication of application: **25.06.2025**
(21) Application number: 23860851.7
(22) Date of filing: 29.08.2023
(51) Int. Cl.: G06F 3/0484, G02B 27/01, G06F 3/01, G06T 19/00, G06F 3/00

(54) **DISPLAY METHOD WHILE WEARING HEAD MOUNTED DISPLAY (HMD) DEVICE, AND DEVICE THEREFOR**

(30) Priority: 01.09.2022 KR 20220110975; 12.10.2022 KR 20220130814
(71) Applicant: Samsung Electronics Co., Ltd., Suwon-si, Gyeonggi-do 16677 (KR)
(72) Inventor: KO, Taehun, Suwon-si, Gyeonggi-do 16677 (KR); EOM, Hongyeul, Suwon-si, Gyeonggi-do 16677 (KR); HAN, Hoon, Suwon-si, Gyeonggi-do 16677 (KR); MOON, Choonkyoung, Suwon-si, Gyeonggi-do 16677 (KR); BAE, Jonghyuk, Suwon-si, Gyeonggi-do 16677 (KR); LEE, Seungjoon, Suwon-si, Gyeonggi-do 16677 (KR)
(74) Representative: Arnold & Siedsma
(86) International application number: PCT/KR2023/012817
(87) International publication number: WO 2024/049175

(57) **Abstract**

According to an embodiment of the present disclosure, a method, performed by an electronic device, of displaying a notification from an external device may include obtaining notification information from the external device. According to an embodiment of the present disclosure, the method, performed by the electronic device, of displaying the notification from the external device may obtain the location information of the external device. According to an embodiment of the present disclosure, the method, performed by the electronic device, of displaying the notification from the external device may determine a location and a size of a first region of a display to be displayed by using video see-through (VST), based on the obtained location information of the external device. According to an embodiment of the present disclosure, the method, performed by the electronic device, of displaying the notification from the external device may display the first region by using the VST.

## Description

### Technical Field

Head-mounted display (HMD) devices are able to provide a higher level of immersion when viewing virtual-reality content. The present disclosure relates to a display method performed by a head-mounted display (HMD) device while worn, and a device therefor.

### Background Art

Immersive experience refers to the blurring of boundaries between the physical real world and a virtually created world, allowing one to feel a virtual space as if it were real, or refers to such technology. Immersive experience has gained more attention with the advancement of sensory-related technologies such as augmented reality, mixed reality, or 360° videos. Among these, virtual reality (VR) is the most well-known technology within immersive technologies. Virtual reality refers to the artificial creation of a particular space by using a computer or device.

HMD devices are able to provide a higher level of immersion when viewing virtual reality content. In particular, closed-view HMD devices are able to provide a positive user experience with VR content by completely blocking an external view, but it may be difficult for users wearing closed-view HMD devices to interact with the external world due to isolation from the outside world.

### Disclosure of Invention

### Technical Problem

According to an embodiment of the present disclosure, a method, performed by an electronic device, of displaying a notification from an external device may include obtaining notification information from the external device. According to an embodiment of the present disclosure, the method, performed by an electronic device, of displaying a notification from an external device may obtain location information of the external device. According to an embodiment of the present disclosure, the method, performed by an electronic device, of displaying a notification from an external device may determine a location and a size of a first region of a display to be displayed by using video see-through (VST), based on the obtained location information of the external device. According to an embodiment of the present disclosure, the method, performed by an electronic device, of displaying a notification from an external device may display the first region by using the VST.

According to an embodiment of the present disclosure, an electronic device for displaying a notification from an external device may include: a display; a storage unit storing a program comprising at least one instruction; and at least one processor configured to execute the at least one instruction stored in the storage unit. According to an embodiment of the present disclosure, in the electronic device for displaying a notification from an external device, the at least one processor may execute the at least one instruction to obtain notification information from the external device. According to an embodiment of the present disclosure, in the electronic device for displaying a notification from an external device, the at least one processor may execute the at least one instruction to obtain location information of the external device. According to an embodiment of the present disclosure, in the electronic device for displaying a notification from an external device, the at least one processor may execute the at least one instruction to determine a location and a size of a first region of the display to be displayed by using the VST, based on the obtained location information of the external device. According to an embodiment of the present disclosure, in the electronic device for displaying a notification from an external device, the at least one processor may execute the at least one instruction to display the first region by using the VST.

In addition, according to an embodiment of the present disclosure, provided is a computer-readable recording medium having recorded thereon a program for executing the above-described method.

### Brief Description of Drawings

FIG. 1A is a diagram for describing a method, performed by an electronic device, of displaying a notification received from an external device, according to an embodiment of the present disclosure.
FIG. 1B is a diagram for describing a method, performed by an electronic device, of displaying a notification received from an external device, according to an embodiment of the present disclosure.
FIG. 2 illustrates a configuration of a display of an electronic device, according to an embodiment of the present disclosure.
FIG. 3 is a diagram for describing a method, performed by an electronic device, of displaying a notification received from an external device, according to an embodiment of the present disclosure.
FIG. 4A illustrates various video see-through (VST) regions displayed on a display of an electronic device when the distance to an external device is within a first threshold distance, according to an embodiment of the present disclosure.
FIG. 4B illustrates various VST regions displayed on a display of an electronic device when the distance to an external device is within a first threshold distance, according to an embodiment of the present disclosure.
FIG. 4C illustrates various VST regions displayed on a display of an electronic device when the distance to an external device is within a first threshold distance, according to an embodiment of the present disclosure.
FIG. 5 is a flowchart of a method, performed by an electronic device, of displaying a notification from an external device, according to an embodiment of the present disclosure.
FIG. 6 is a detailed flowchart of a method, performed by an electronic device, of displaying a notification from an external device, according to an embodiment of the present disclosure.
FIG. 7 is a diagram for describing a method, performed by an electronic device, of displaying a notification received from a mobile device, according to an embodiment of the present disclosure.
FIG. 8 is a diagram for describing a method, performed by an electronic device, of displaying a notification received from a wearable device, according to an embodiment of the present disclosure.
FIG. 9 is a diagram for describing an operation performed by an electronic device when receiving a notification from an external device located further away than a first threshold distance, according to an embodiment of the present disclosure.
FIG. 10 is a diagram for describing an operation performed by an electronic device when receiving a high-priority notification from an external device, according to an embodiment of the present disclosure.
FIG. 11 is a diagram for describing a method, performed by an electronic device, of identifying the location of an external device and displaying VST, according to an embodiment of the present disclosure.
FIG. 12 is a diagram for describing a method, performed by an electronic device, of displaying VST based on object recognition, according to an embodiment of the present disclosure.
FIG. 13A illustrates an example of an electronic device according to an embodiment of the present disclosure.
FIG. 13B illustrates an example of an electronic device according to an embodiment of the present disclosure.
FIG. 14 is a block diagram of an electronic device according to an embodiment of the present disclosure.

### Mode for the Invention

Hereinafter, embodiments of the present disclosure will be described in detail with reference to the accompanying drawings for those of skill in the art to be able to perform the embodiments without any difficulty. The present disclosure may, however, be embodied in many different forms and should not be construed as being limited to the embodiments set forth herein. In addition, in order to clearly describe the present disclosure, portions that are not relevant to the description of the present disclosure are omitted, and similar reference numerals are assigned to similar elements throughout the specification.

Throughout the specification, when a part is referred to as being "connected to" another part, it may be "directly connected to" the other part or be "electrically connected to" the other part through an intervening element. In addition, when an element is referred to as "including" a component, the element may additionally include other components rather than excluding other components as long as there is no particular opposing recitation.

In the present disclosure, 'virtual reality (VR)' refers to the presentation of virtual images as if they were real.

In addition, 'virtual reality device' or 'VR device' refers to a device capable of showing 'virtual reality', and encompasses not only VR devices resembling eyeglasses that are typically worn on a user's face but also head-mounted display (HMD) devices and VR helmets that are worn on the user's head, or the like.

Hereinafter, the present disclosure will be described in detail with reference to the accompanying drawings.

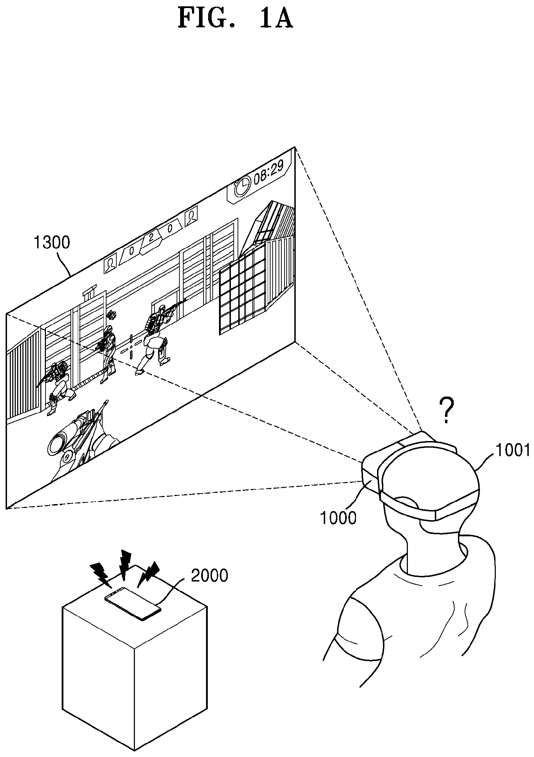

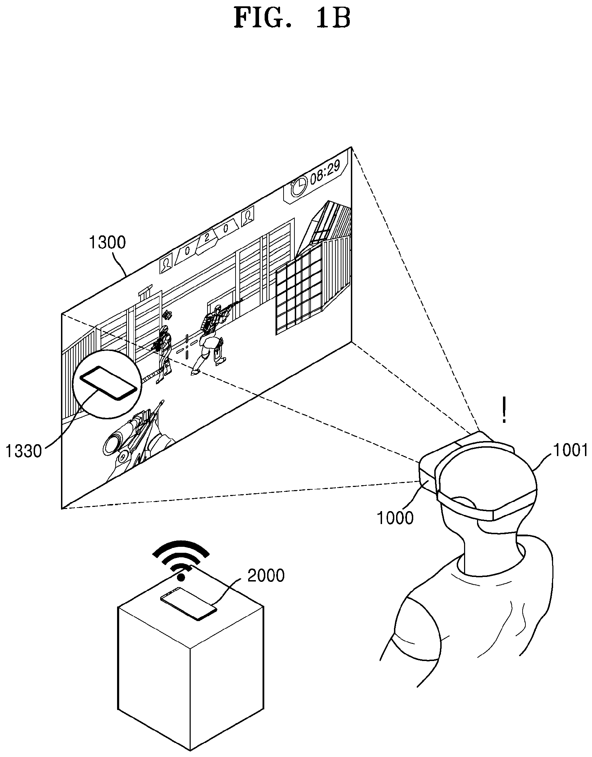

FIG. 1A and FIG. 1B are diagrams for describing a method, performed by an electronic device, of displaying a notification received from an external device, according to an embodiment of the present disclosure.

In the present disclosure, an electronic device 1000 may be an HMD device, and an external device 2000 may be a mobile device or a wearable device, but the present disclosure is not limited thereto.

Immersive experience refers to the blurring of boundaries between the physical real world and a virtually created world, allowing one to feel a virtual space as if it were real, or refers to such technology. Immersive experience has gained more attention with the advancement of sensory-related technologies such as augmented reality, mixed reality, or 360° videos. Among these, virtual reality (VR) is the most well-known technology within immersive technologies. Virtual reality refers to the artificial creation of a particular space using a computer or device.

For VR content, a level of immersion is the most important factor in determining a user experience, and HMD VR devices have been widely used to provide a higher level of immersion, and in particular, in closed-view HMD VR devices block an external view to enable greater immersion in VR content. Users wearing closed-view HMD VR devices are able to immerse themselves in VR content, but may be unable to recognize real-world situations when they want or need to perceive them. For example, such cases include a case in which someone tries to talk to a user using an HMD VR device for immersive VR content, a case in which the user wants to drink water, or a case in which the user wants to use a mobile phone.

Referring to FIG. 1A, it is assumed that a notification is received by the external device 2000 when a user 1001 wearing the electronic device 1000 is using augmented reality (AR) content. The electronic device 1000 is a device capable of providing VR content, and may be a closed-view HMD device.

The user 1001 wearing the electronic device 1000, which is a closed-view HMD display device, may become more immersed in VR content, but has difficulties in recognizing or responding to external situations. For example, in a case in which a notification is received by the external device 2000, the user 1001 may not recognize that the notification has been received and thus may not respond to the notification, or even when the user recognizes that the notification has been received, the user needs to take off the electronic device 1000 to respond to the notification, which may disrupt the immersion.

For example, when the notification is a simple text message or an unimportant notification, there's often no need to pause viewing of game or video content, and thus, unconditionally stopping reproduction of content or requiring the user to take an action to respond to the notification regardless of its importance may disrupt the immersion. On the contrary, when the notification requires immediate intervention or response from the user, such as a dangerous situation, it is necessary to stop reproduction of content and intervene in the situation.

Referring to FIG. 1B, when the user 1001 wearing the electronic device 1000 is using AR content, and a notification is received by the external device 2000, the electronic device 1000 may identify that the notification has been received by the external device 2000, and display the notification on a first region 1330 of a display 1300 of the electronic device 1000 by using video see-through (VST).

Unlike optical see-through (OST), which superimposes a virtual image projected on a display (a lens) onto an external environment being perceived directly by the user's eyes through a see-through display, VST refers to a display method that superimposes an image captured by a camera (or a vision sensor) onto virtual content, and may also be referred to as pass-through.

The user may determine the importance and urgency of the notification by identifying that the notification has been received by the external device 2000 and the content of the notification through the first region 1330 displayed by using VST, and determine whether to stop reproduction of the VR content and to respond to the notification.

Here, the location, size, and shape of the first region 1330 on the display 1300 of the electronic device 1000 may be variously determined. According to an embodiment of the present disclosure, the location and size of the first region 1330 may be determined based on location information of the external device 2000, and may be dynamically determined based on real-time location information of the external device 2000. The location information of the external device 2000 may include information about the direction of the external device 2000 with respect to the electronic device 1000, and information about the distance between the electronic device 1000 and the external device 2000.

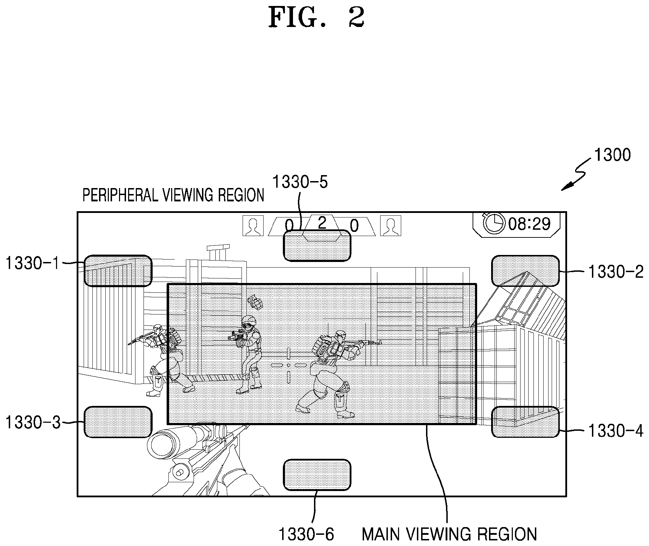

FIG. 2 illustrates a configuration of a display of an electronic device, according to an embodiment of the present disclosure.

According to an embodiment of the present disclosure, the display 1300 of the electronic device 1000 may include a main viewing region 1310 and a peripheral viewing region 1320. For the user's immersive experience, it may be desirable that the VR content is displayed in the main viewing region 1310, and a notification display region (not shown) or the first region 1330 displayed by using VST is included in the peripheral viewing region 1320. In the present disclosure, the notification display region may be referred to as a second region.

According to an embodiment of the present disclosure, the location of the second region (not shown) or the first region 1330 may be determined as any one of 1330-1 to 1330-6 based on the direction of the external device 2000 with respect to the electronic device 1000. According to an embodiment of the present disclosure, the size, location, and shape of the second region (not shown) may be identical to or different from the size, location, and shape of the first region 1330.

Display of notification information obtained from the external device 2000 in the second region (not shown) may function as an affordance to induce the user's input to switch the first region 1330 to VST. When the notification information obtained from the external device 2000 is displayed in the second region (not shown), the user may determine whether to switch the first region 1330 to VST, and deliver a user input corresponding to the determination to the electronic device 1000. The user input may be input through an input unit of the electronic device 1000 or through a control device (e.g., a joystick or a separate input device) that is linked to the electronic device 1000.

The user input may include various forms of input through various user interfaces, such as voices, motions, or gazes, in addition to an input through physical buttons, touch screen, or the like provided on the electronic device 1000 or a control device linked to the electronic device 1000.

In HMD-type electronic devices, gaze input is useful as a user interface. The electronic device 1000 may include a gaze tracking (or eye tracking) sensor, and the electronic device 1000 may obtain the user's gaze based on feature points of the user's eyes that are obtained through the gaze tracking sensor.

For example, when notification information obtained from the external device 2000 is displayed on the display 1300, an eye tracking (ET) camera of the electronic device 1000 tracks the user's gaze. When, as a result of gaze tracking, a time period during which the user's gaze remains on the notification information is less than a predetermined first threshold time period (e.g., T1 sec), the electronic device 1000 removes the notification information from the display 1300 after a predetermined second threshold time period (e.g., T2 sec) has elapsed. On the contrary, when the time period during which the user's gaze remains on the notification information is greater than or equal to the predetermined first threshold time period (e.g., T1 sec), the electronic device 1000 switches the first region 1330 to VST and then displays it, thereby allowing the user to perform an interaction with the external device (e.g., receiving a call, responding to a message, or other control) corresponding to the content of the notification.

In HMD-type electronic devices that operate in conjunction with wearable devices, gesture (or motion) input is useful as a user interface. A smart watch and the electronic device 1000 may include a sensor capable of detecting the user's motion or the distance and location of the smart watch and the electronic device (e.g., a gyro sensor, a light detection and ranging (LiDAR) sensor, a RADAR sensor, an infrared sensor, or a vision sensor).

For example, when the user wearing the smart watch places the smart watch in front of an HMD to makes a motion as if looking at a wristwatch, the electronic device 1000 may identify the user's movement or motion as a user input and display the first region 1330 by using VST. Alternatively, the electronic device 1000 may output, on the display 1300, an instruction (affordance) to position the wearable device 2000 in a field of view (FOV), and when the wearable device 2000 is positioned in the FOV according to the instruction, the electronic device 1000 may identify this positioning as a user input for switching the display to VST.

Alternatively, the electronic device 1000 may determine whether to switch the whole or a partial region of the display to a VST mode, based on a button input or a hand gesture input via a separate controller.

Here, the size, location, and shape of the region displayed by using VST may be determined based on the location information of the external device 2000.

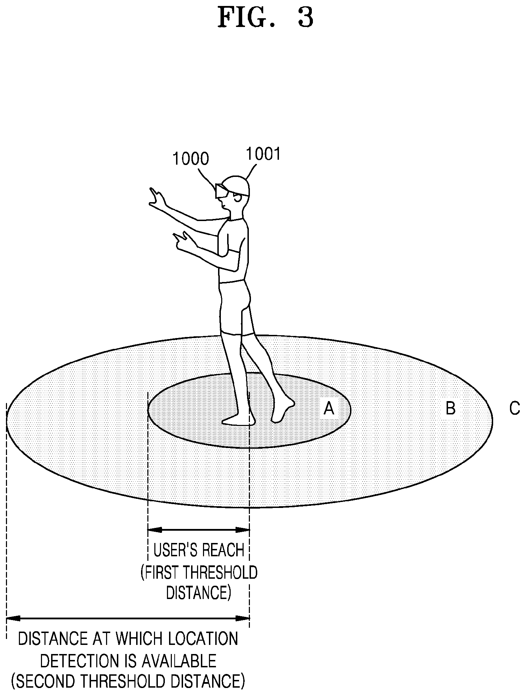

FIG. 3 is a diagram for describing a method, performed by an electronic device, of displaying a notification received from an external device, according to an embodiment of the present disclosure.

Referring to FIG. 3, the user's reach may be defined as a first threshold distance, and a distance at which the electronic device 1000 is able to obtain the location of the external device 2000 may be defined as a second threshold distance.

The first threshold distance refers to a distance that the user 1001 wearing the HMD-type electronic device 1000 may reach by extending his/her hand without moving from his/her current location, and may be determined based on demographic information. The second threshold distance refers to a distance at which the electronic device 1000 is able to identify, by using a camera or a sensor of a short-range communication module or the like, the location of the external device 2000 that has transmitted notification reception information, and may be determined based on sensor performance or settings of the electronic device 1000.

According to an embodiment of the present disclosure, when the distance to the external device 2000 is less than or equal to the first threshold distance, upon obtaining notification information from the external device 2000, the electronic device 1000 may dynamically determine the size of the first region 1330 to be displayed by using VST. For example, the electronic device 1000 may display the first region 1330 to be larger as the distance to the external device 2000 decreases, so as to allow the user to recognize that the external device 2000 is close, and may display the first region 1330 to be smaller as the distance to the external device 2000 increases, so as to allow the user to recognize that the external device 2000 is far away.

According to an embodiment of the present disclosure, when the distance to the external device 2000 is greater than the first threshold distance, upon obtaining notification information from the external device 2000, the electronic device 1000 may determine the entire display 1300 as the first region 1330 to display the entire region of the display 1300 by using VST. When the external device 2000 is further away than the first threshold distance, the user needs to move to check the external device 2000, and thus, the user may safely move near the external device 2000 while maintaining the field of view through the VST without removing the electronic device 1000.

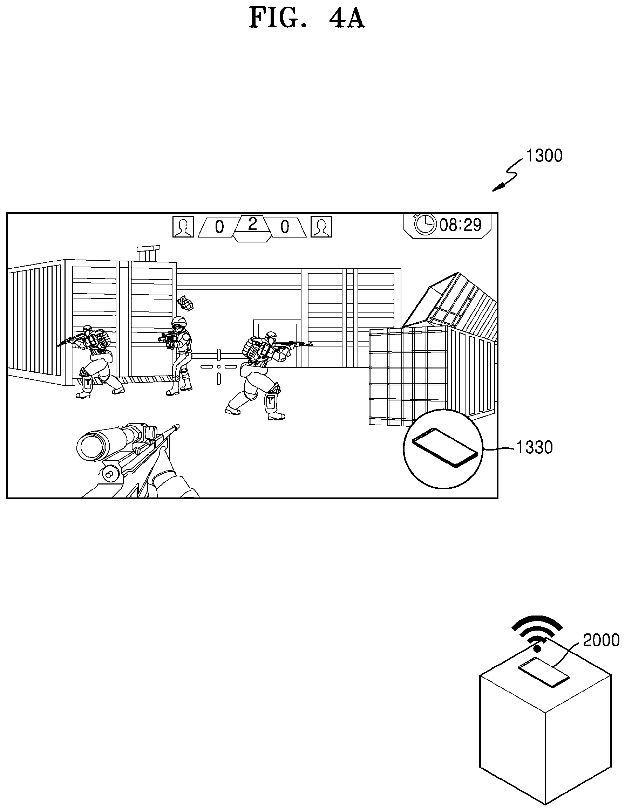

FIGS. 4A to 4C illustrate various VST regions displayed on a display of an electronic device when the distance to an external device is within a first threshold distance, according to an embodiment of the present disclosure.

Referring to FIG. 4A, the external device 2000 may be positioned at the right rear of the electronic device 1000, and the external device 2000 may be positioned within the first threshold distance from the electronic device 1000 but at a relatively long distance. In this case, the first region 1330 displayed by using VST may be located at a lower right portion of the peripheral viewing region 1320 of the display 1300, and the size of the first region 1330 may be determined by considering the distance between the external device 2000 and the electronic device 1000.

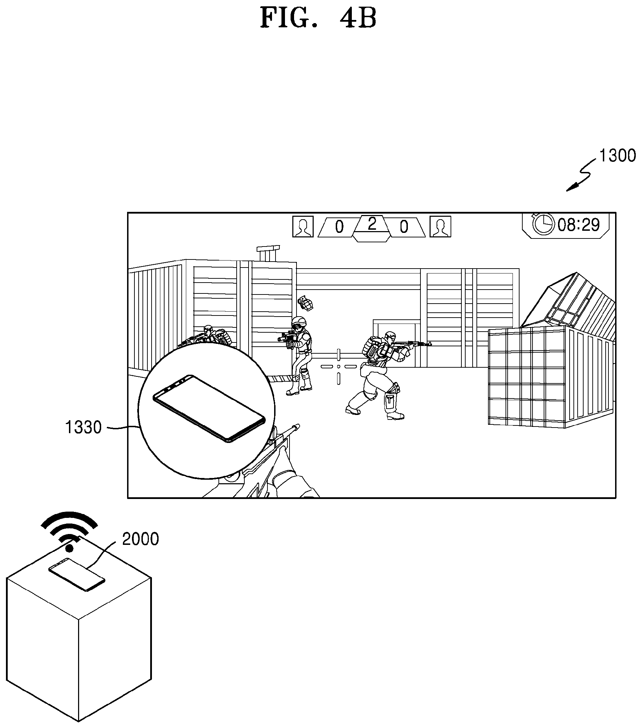

Referring to FIG. 4B, the external device 2000 may be positioned at the left rear of the electronic device 1000, and the external device 2000 may be positioned at a close distance from the electronic device 1000. In this case, the first region displayed by using VST may be located at a lower left portion of the peripheral viewing region 1320 of the display 1300, and the size of the first region 1330 may be determined by considering the distance between the external device 2000 and the electronic device 1000.

According to an embodiment of the present disclosure, when the distance between the external device 2000 and the electronic device 1000 is far as illustrated in FIG. 4A, the electronic device 1000 may display the first region 1330 to be small so as to allow the user 1001 to recognize that the external device 2000 is far away. In addition, when the distance between the external device 2000 and the electronic device 1000 is close as illustrated in FIG. 4B, the electronic device 1000 may display the first region 1330 to be large so as to allow the user 1001 to recognize that the external device 2000 is close.

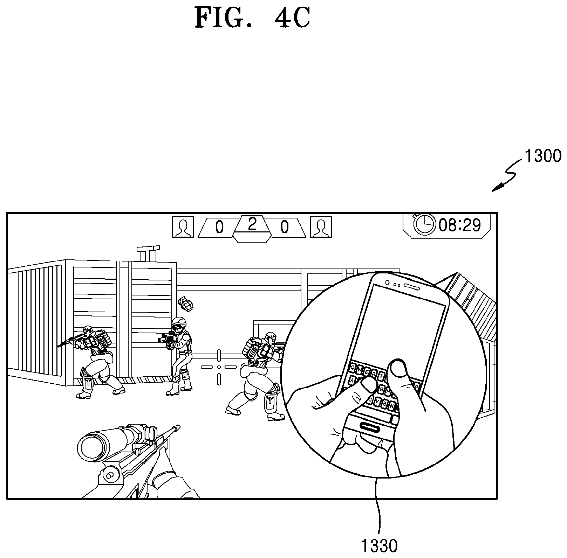

Referring to FIG. 4C, when the electronic device 1000 displays the first region 1330 by using VST, the size and location of the first region 1330 may be dynamically changed in real time based on location information of the external device 2000. In addition, the first region 1330 may display in real time a situation captured by an external camera, and accordingly, the user may use and control the external device 2000 while wearing the electronic device 1000. For example, the user may interact with the external device 2000, such as sending a reply to a message received by the external device 2000 or receiving a phone call.

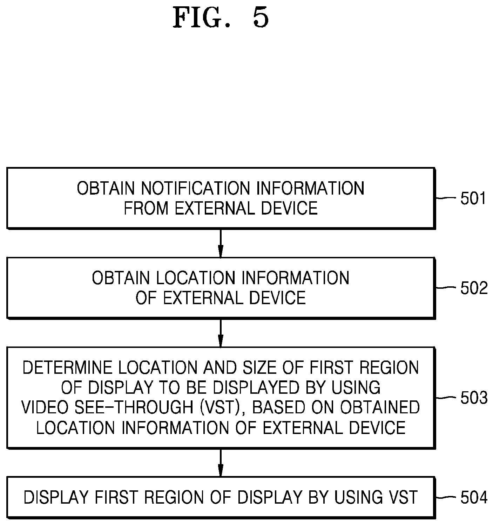

FIG. 5 is a flowchart of a method, performed by an electronic device, of displaying a notification from an external device, according to an embodiment of the present disclosure.

In operation S501, the electronic device 1000 may obtain notification information from the external device 2000.

The external device 2000 is an object that constitutes an external world to the user 1001 of the electronic device 1000, and may include a device capable of communicating with the electronic device 1000 via electrical signals, such as a mobile device, a wearable device, or a home appliance.

The notification information may include identification information of the external device, the type of notification, a notification icon, a display method, or the content of the notification. The identification information of the external device may include at least one of the type, manufacturer, model, serial number, and identifier of the external device.

The type of notification may include information about an application that has generated the notification on the external device 2000, whether the notification requires a user response, and the importance of the notification.

In operation S502, the electronic device 1000 may obtain location information of the external device 2000.

The location information of the external device 2000 may include information about the direction of the external device 2000 with respect to the electronic device 1000, and information about the distance between the electronic device 1000 and the external device 2000.

The information about the direction and distance of the external device 2000 with respect to the electronic device 1000 may be obtained by at least one of a sensor, a communication interface, or a camera provided in the electronic device 1000 or the external device 2000. For example, the electronic device 1000 may obtain the location and distance of the external device 2000 by using a camera capable of photographing the outside of an HMD display device. In addition, the electronic device 1000 may obtain the location and distance of the external device 2000 by using a sensor such as a gyro sensor, a RADAR, or a LiDAR. Alternatively, the electronic device 1000 may obtain the location and distance of the external device 2000 by using a communication interface for short-range communication with the external device 2000.

In operation S503, the electronic device 1000 may determine the location and size of the first region 1330 of the display 1300 to be displayed by using VST, based on the obtained location information of the external device 2000.

Unlike OST, which superimposes a virtual image projected on a display (a lens) onto an external environment being perceived directly by the user's eyes through a see-through display, VST refers to a display method that superimposes an image captured by a camera onto virtual content, and may also be referred to as pass-through.

According to an embodiment of the present disclosure, the display 1300 of the electronic device 1000 may include the main viewing region 1310 and the peripheral viewing region 1320. For the user's immersive experience, it may be desirable that VR content is displayed in the main viewing region 1310, and the first region 1330 displayed by using VST is included in the peripheral viewing region 1320.

According to an embodiment of the present disclosure, the location and size of the first region 1330 may be determined based on location information of the external device 2000, and may be dynamically determined based on real-time location information of the external device 2000. For example, according to an embodiment of the present disclosure, the first region 1330 may be included in the peripheral viewing region 1320 of the display 1300, and the location of the first region 1330 may be determined based on a direction in which the external device 2000 is positioned with respect to the electronic device 1000.

According to an embodiment of the present disclosure, the size of the first region 1330 may be determined based on the distance between the electronic device 1000 and the external device 2000, and for example, when the distance between the electronic device 1000 and the external device 2000 is close, the first region 1330 may be displayed to be large, and when the distance between the electronic device 1000 and the external device 2000 is far, the first region 1330 may be displayed to be small, so as to allow the user to recognize the distance to the external device 2000.

According to an embodiment of the present disclosure, the shape of the first region 1330 may be determined variously. For example, the shape of the first region 1330 may be a quadrangle or a circle, and may be a shape determined based on the shape of the external device 2000.

In operation S504, the electronic device 1000 may display the first region 1330 of the display 1300 by using VST.

According to an embodiment of the present disclosure, while VR content is being reproduced on the display 1300, the electronic device 1000 may display a real-time external image captured by a camera to be combined with the first region 1330.

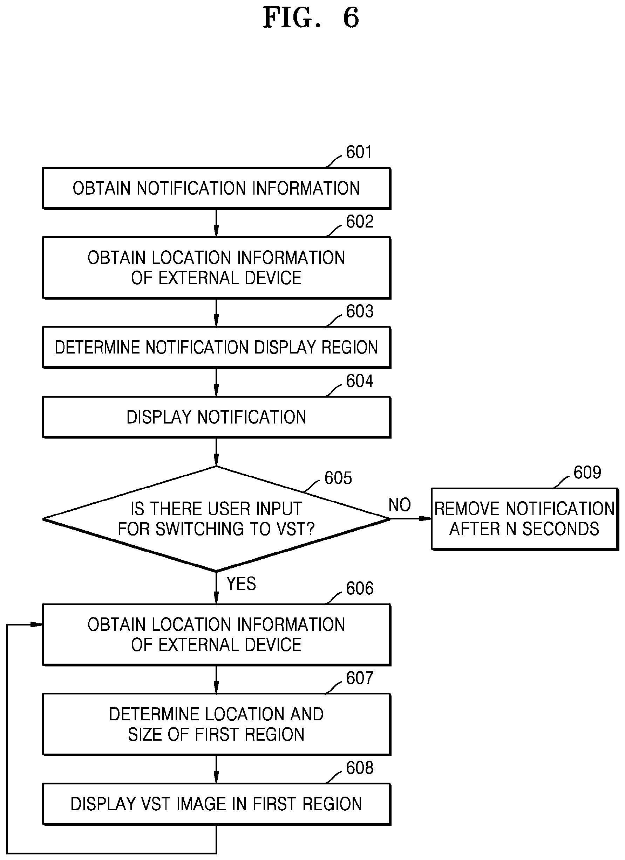

FIG. 6 is a detailed flowchart of a method, performed by an electronic device, of displaying a notification from an external device, according to an embodiment of the present disclosure.

Referring to FIG. 6, when notification information is obtained, the electronic device 1000 may display the obtained notification information, and obtain, from the user, a user input regarding whether to switch a partial region of the display to VST.

In the description of FIG. 6, redundant descriptions provided above with reference to FIG. 5 may be briefly provided or omitted.

In operation S601, the electronic device 1000 may obtain notification information from the external device 2000.

The external device 2000 is an object that constitutes an external world to the user 1001 of the electronic device 1000, and may include a device capable of communicating with the electronic device 1000 via electrical signals, such as a mobile device, a wearable device, or a home appliance.

The notification information may include identification information of the external device, the type of notification, a notification icon, a display method, or the content of the notification. The identification information of the external device may include at least one of the type, manufacturer, model, serial number, and identifier of the external device.

The type of notification may include information about an application that has generated the notification on the external device 2000, whether the notification requires a user response, and the importance of the notification.

In operation S602, the electronic device 1000 may obtain location information of the external device 2000.

The location information of the external device 2000 may include information about the direction of the external device 2000 with respect to the electronic device 1000, and information about the distance between the electronic device 1000 and the external device 2000.

The information about the direction and distance of the external device 2000 with respect to the electronic device 1000 may be obtained by at least one of a sensor, a communication interface, or a camera provided in the electronic device 1000 or the external device 2000. For example, the electronic device 1000 may obtain the location and distance of the external device 2000 by using a camera capable of photographing the outside of an HMD display device. In addition, the electronic device 1000 may obtain the location and distance of the external device 2000 by using a sensor such as a gyro sensor, a RADAR, or a LiDAR. Alternatively, the electronic device 1000 may obtain the location and distance of the external device 2000 by using a communication interface for short-range communication with the external device 2000.

In operation S603, the electronic device 1000 may determine a notification display region where a notification obtained from the external device is to be displayed.

According to an embodiment of the present disclosure, the electronic device 1000 may determine the size and location of the notification display region (also referred to as a second region) where the notification obtained from the external device is to be displayed.

According to an embodiment of the present disclosure, the display 1300 of the electronic device 1000 may include the main viewing region 1310 and the peripheral viewing region 1320. For the user's immersive experience, it may be desirable that VR content is displayed in the main viewing region 1310, and the notification display region is included in the peripheral viewing region 1320.

According to an embodiment of the present disclosure, the location of the notification display region may be determined based on the direction of the external device 2000 with respect to the electronic device 1000. According to an embodiment of the present disclosure, the size, location, and shape of the notification display region may be identical to or different from the size, location, and shape of the first region 1330.

In operation S604, the electronic device 1000 may display the notification obtained from the external device.

As described above, the notification information may include identification information of the external device, the type of the notification, a notification icon, a display method, or the content of the notification, and the type of notification may include information about an application that has generated the notification on the external device 2000, whether the notification requires a user response, and the importance of the notification.

The electronic device 1000 according to an embodiment of the present disclosure may display information about the notification along with information about the external device, such that the user may determine whether to ignore the notification and continue to use the VR content, whether to respond to the notification through VST while continuing to use the VR content, whether to stop using the VR content and respond to the notification through VST, or whether to take off the electronic device and respond to the notification.

The electronic device 1000 according to an embodiment of the present disclosure may stop providing the VR content based on the importance of the notification, and induce the user to respond to the notification through VST. For example, when the notification is an urgent notification or a notification related to the user's safety, the electronic device 1000 may stop the reproduction of the VR and switch the entire display VST, such that the user may recognize an emergency or dangerous situation and respond thereto appropriately.

In operation S605, the electronic device 1000 may identify a user input for switching the display to VST.

According to an embodiment of the present disclosure, the electronic device 1000 may determine a type of user input corresponding to an affordance, and identify the corresponding type of user input. According to an embodiment of the present disclosure, the electronic device 1000 may identify a user input corresponding to a predetermined user input type.

According to an embodiment of the present disclosure, the notification information displayed in the notification display region may function as an affordance to induce a user input to switch the first region 1330 to VST. When the notification information obtained from the external device 2000 is displayed in the notification display region, the user may determine whether to switch the first region 1330 to VST, and deliver a user input corresponding to the determination to the electronic device 1000. The user input may be input through an input unit of the electronic device 1000 or through a control device (e.g., a joystick or a separate input device) that is linked to the electronic device 1000.

The user input may include various forms of input through various user interfaces, such as voices, motions, or gazes, in addition to an input through physical buttons, touch screen, or the like provided on the electronic device 1000 or a control device linked to the electronic device 1000.

In HMD-type electronic devices, gaze input is useful as a user interface. The electronic device 1000 may include a gaze tracking (or eye tracking) sensor, and the electronic device 1000 may obtain the user's gaze based on feature points of the user's eyes that are obtained through the gaze tracking sensor.

For example, when notification information obtained from the external device 2000 is displayed on the display 1300, an ET camera of the electronic device 1000 tracks the user's gaze. When, as a result of gaze tracking, a time period during which the user's gaze remains on the notification information is less than a predetermined first threshold time period (e.g., T1 msec), the electronic device 1000 removes the notification information from the display 1300 after a predetermined second threshold time period (e.g., T2 sec) has elapsed. On the contrary, when the time period during which the user's gaze remains on the notification information is greater than or equal to the predetermined first threshold time period (e.g., T1 msec), the electronic device 1000 switches the first region 1330 to VST and then displays it, thereby allowing the user to perform an interaction with the external device (e.g., receiving a call, responding to a message, or other control) corresponding to the content of the notification.

In operation S609, when no user input is identified in operation S605, the electronic device 1000 may remove the notification after a predetermined time period has elapsed.

In operation S606, the electronic device 1000 may obtain location information of the external device 2000.

The location information of the external device 2000 may include information about the direction of the external device 2000 with respect to the electronic device 1000, and information about the distance between the electronic device 1000 and the external device 2000.

In operation S607, the electronic device 1000 may determine the location and size of the first region 1330 of the display 1300 to be displayed by using VST, based on the obtained location information of the external device 2000.

According to an embodiment of the present disclosure, the location and size of the first region 1330 may be determined based on location information of the external device 2000, and may be dynamically determined based on real-time location information of the external device 2000. For example, according to an embodiment of the present disclosure, the first region 1330 may be included in the peripheral viewing region 1320 of the display 1300, and the location of the first region 1330 may be determined based on a direction in which the external device 2000 is positioned with respect to the electronic device 1000.

According to an embodiment of the present disclosure, the size of the first region 1330 may be determined based on the distance between the electronic device 1000 and the external device 2000, and for example, when the distance between the electronic device 1000 and the external device 2000 is close, the first region 1330 may be displayed to be large, and when the distance between the electronic device 1000 and the external device 2000 is far, the first region 1330 may be displayed to be small, so as to allow the user to recognize the distance to the external device 2000.

According to an embodiment of the present disclosure, the shape of the first region 1330 may be determined variously. For example, the shape of the first region 1330 may be a quadrangle or a circle, and may be a shape determined based on the shape of the external device 2000.

In operation S608, the electronic device 1000 may display the first region 1330 of the display 1300 by using VST.

According to an embodiment of the present disclosure, while VR content is being reproduced on the display 1300, the electronic device 1000 may display a real-time external image captured by a camera to be combined with the first region 1330.

According to an embodiment of the present disclosure, the electronic device 1000 may perform operations S606 to S609 at predetermined intervals to dynamically determine the size and location of the first region 1330, and display a real-time external image in the determined first region 1330 by using VST.

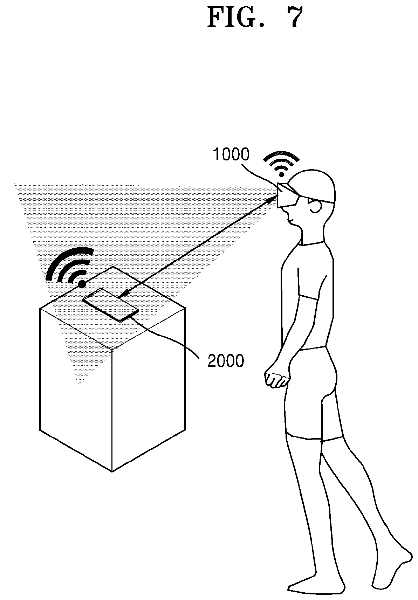

FIG. 7 is a diagram for describing a method, performed by an electronic device, of displaying a notification received from a mobile device, according to an embodiment of the present disclosure.

In the description of FIG. 7, redundant descriptions provided above with reference to FIG. 5 or 6 may be briefly provided or omitted.

The mobile device 2000 may include, but is not limited to, a smart phone, a personal digital assistant (PDA), a tablet, or a laptop, and may refer to any mobile device having a communication function. The electronic device 1000 and the mobile device 2000 may be linked (or registered) with each other in advance.

Referring to FIG. 7, it is assumed that the mobile device 2000 is located within a first threshold distance from the electronic device 1000 and the electronic device 1000 is able to identify the location of the mobile device 2000. The first threshold distance refers to a distance that the user 1001 wearing the HMD-type electronic device 1000 may reach by extending his/her hand without moving from his/her current location.

The mobile device 2000 may transmit, to the electronic device 1000, notification information about a notification received from an external source (e.g., an external server) or a notification generated by the mobile device 2000.

The electronic device 1000 that has obtained the notification information from the mobile device 2000 may identify the mobile device 2000 that has transmitted the notification information, based on pre-registered information about the mobile device 2000 or information about the mobile device 2000 that has been transmitted together with the notification information, and obtain location information of the mobile device 2000. The location information of the mobile device 2000 may include the direction of the mobile device 2000 and the distance from the electronic device 1000, and may be obtained based on a camera, various sensors, or a short-range communication module provided in the electronic device 1000.

The electronic device 1000 may determine a second region where the notification information is to be displayed, based on the location information of the mobile device 2000, and display an affordance and the notification information in the second region.

According to an embodiment of the present disclosure, the electronic device 1000 may determine a type of user input corresponding to an affordance, and identify the corresponding type of user input. According to an embodiment of the present disclosure, the electronic device 1000 may identify a user input corresponding to a predetermined user input type.

According to an embodiment of the present disclosure, the notification information displayed in the notification display region may function as an affordance to induce a user input to switch the first region 1330 to VST. When the notification information obtained from the mobile device 2000 is displayed in the second region, the user may determine whether to switch the first region 1330 to VST, and deliver a user input corresponding to the determination to the electronic device 1000. The user input may be input through an input unit of the electronic device 1000 or through a control device (e.g., a joystick or a separate input device) that is linked to the electronic device 1000.

The user input may include various forms of input through various user interfaces, such as voices, motions, or gazes, in addition to an input through physical buttons, touch screen, or the like provided on the electronic device 1000 or a control device linked to the electronic device 1000.

In HMD-type electronic devices, gaze input is useful as a user interface. The electronic device 1000 may include a gaze tracking (or eye tracking) sensor, and the electronic device 1000 may obtain the user's gaze based on feature points of the user's eyes that are obtained through the gaze tracking sensor.

For example, when the notification information obtained from the mobile device 2000 is displayed on the display 1300, an ET camera (may also be referred to as an ET sensor or a gaze tracking sensor) of the electronic device 1000 tracks the user's gaze. When, as a result of gaze tracking, a time period during which the user's gaze remains on the notification information is less than a predetermined first threshold time period (e.g., T1 sec), the electronic device 1000 removes the notification information from the display 1300 after a predetermined second threshold time period (e.g., T2 sec) has elapsed. On the contrary, when the time period during which the user's gaze remains on the notification information is greater than or equal to the predetermined first threshold time period (e.g., T1 sec), the electronic device 1000 switches the first region 1330 to VST and then displays it, thereby allowing the user to perform an interaction with the mobile device 2000 (e.g., receiving a call, responding to a message, or other control) corresponding to the content of the notification.

As another example, when the external device 2000 is identified within an external FOV of the electronic device 1000, this identifying may be identified as a user input for switching the display to VST.

When a user input for switching the display to VST is identified, the electronic device 1000 may determine the location and size of the first region 1330 of the display 1300 to be displayed by using VST, based on the location information of the mobile device 2000, and display the first region 1330 by using VST. According to an embodiment of the present disclosure, while VR content is being reproduced on the display 1300, the electronic device 1000 may display a real-time external image captured by a camera to be combined with the first region 1330.

According to an embodiment of the present disclosure, the electronic device 1000 may dynamically determine the size and location of the first region 1330 by, at predetermined intervals, obtaining location information of the mobile device 2000 and updating the first region 1330 based on the obtained location information of the mobile device 2000, and display a real-time external image in the determined first region 1330 by using VST.

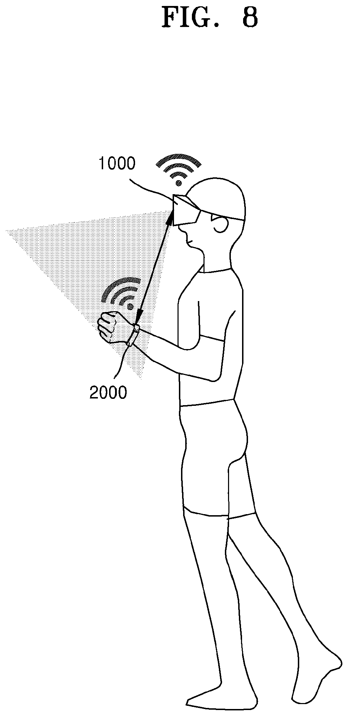

FIG. 8 is a diagram for describing a method, performed by an electronic device, of displaying a notification received from a wearable device, according to an embodiment of the present disclosure.

In the description of FIG. 8, redundant descriptions provided above with reference to FIGS. 5 to 7 may be briefly provided or omitted.

The wearable device 2000 may include, but is not limited to, a smart watch, smart jewelry, smart clothing, a fitness tracker, or a body-mounted sensor, and may refer to any device that has a communication function and is wearable on a user's body. The electronic device 1000 and the wearable device 2000 may be linked (or registered) with each other in advance.

Referring to FIG. 8, it is assumed that the wearable device 2000 is located within a first threshold distance from the electronic device 1000 and the electronic device 1000 is able to identify the location of the wearable device 2000. The first threshold distance refers to a distance that the user 1001 wearing the HMD-type electronic device 1000 may reach by extending his/her hand without moving from his/her current location.

The wearable device 2000 may transmit, to the electronic device 1000, notification information about a notification received from an external source (e.g., an external server or a separate mobile device) or a notification generated by the wearable device 2000.

The electronic device 1000 that has obtained the notification information from the wearable device 2000 may identify the wearable device 2000 that has transmitted the notification information, based on pre-registered information about the wearable device 2000 or information about the wearable device 2000 that has been transmitted together with the notification information, and obtain location information of the wearable device 2000. The location information of the wearable device 2000 may include the direction of the wearable device 2000 and the distance from the electronic device 1000, and may be obtained based on a camera, various sensors, or a short-range communication module provided in the electronic device 1000.

The electronic device 1000 may determine a second region where the notification information is to be displayed, based on the location information of the wearable device 2000, and display an affordance and the notification information in the second region. For example, in a case in which the user is wearing the wearable device 2000 on his/her left wrist, the second region may be determined to be located at a lower left portion of the peripheral viewing region 1320 of the display 1300.

According to an embodiment of the present disclosure, the electronic device 1000 may determine a type of user input corresponding to an affordance, and identify the corresponding type of user input. According to an embodiment of the present disclosure, the electronic device 1000 may identify a user input corresponding to a predetermined user input type.

When the notification information obtained from the wearable device 2000 is displayed in the second region, the user may determine whether to switch the first region 1330 to VST, and deliver a user input corresponding to the determination to the electronic device 1000. The user input may be input through an input unit of the electronic device 1000 or through a control device (e.g., a joystick or a separate input device) that is linked to the electronic device 1000.

The user input may include various forms of input through various user interfaces, such as voices, motions, or gazes, in addition to an input through physical buttons, touch screen, or the like provided on the electronic device 1000 or a control device linked to the electronic device 1000.

In the HMD-type electronic device that operates in conjunction with the wearable device 2000, gesture (or motion) input is useful as a user interface. A smart watch and the electronic device 1000 may include a sensor capable of detecting the user's motion or the distance and location of the smart watch and the electronic device (e.g., a gyro sensor, a LiDAR sensor, a RADAR sensor, an infrared sensor, or a camera sensor).

For example, when the user wearing the smart watch places the smart watch in front of an HMD to makes a motion as if looking at a wristwatch, the electronic device 1000 may identify the user's movement or motion as a user input and display the first region 1330 by using VST. Alternatively, the electronic device 1000 may output, on the display 1300, an instruction (affordance) to position the wearable device 2000 in an FOV, and when the wearable device 2000 is positioned in the FOV according to the instruction, the electronic device 1000 may identify this positioning as a user input for switching the display to VST.

When a user input for switching the display to VST is identified, the electronic device 1000 may determine the location and size of the first region 1330 of the display 1300 to be displayed by using VST, based on the location information of the mobile device 2000, and display the first region 1330 by using VST. According to an embodiment of the present disclosure, while VR content is being reproduced on the display 1300, the electronic device 1000 may display a real-time external image captured by a camera to be combined with the first region 1330.

According to an embodiment of the present disclosure, the electronic device 1000 may dynamically determine the size and location of the first region 1330 by, at predetermined intervals, obtaining location information of the wearable device 2000 and updating the first region 1330 based on the obtained location information of the wearable device 2000, and display a real-time external image in the determined first region 1330 by using VST.

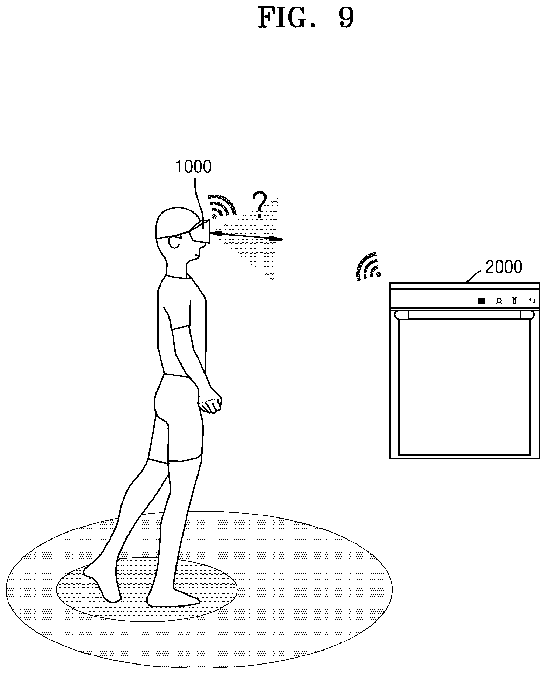

FIG. 9 is a diagram for describing an operation performed by an electronic device when receiving a notification from an external device located further away than a first threshold distance, according to an embodiment of the present disclosure.

In the description of FIG. 9, redundant descriptions provided above with reference to FIGS. 5 to 8 may be briefly provided or omitted.

Referring to FIG. 9, it is assumed that the external device 2000 is located further away from the electronic device 1000 than a first threshold distance, and the electronic device 1000 is unable to identify the location of the external device 2000. Cases in which the electronic device 1000 is unable to identify the location of the external device 2000 may include a case in which the external device 2000 is located further than a second threshold distance at which the external device 2000 may be identified by a sensor of the electronic device 1000, or a case in which the FOV of the electronic device 1000 is blocked by an obstacle or the like. For example, in a case in which the external device 2000 is a dishwasher, when washing is finished, the dishwasher may transmit a termination notification to the electronic device 1000. When the dishwasher is located in a kitchen and the user is using the electronic device 1000 in a living room, the FOV of the dishwasher may be obstructed by structures or furniture in the house, and in this case, the electronic device 1000 is unable to identify the location of the external device 2000.

The external device 2000 may transmit, to the electronic device 1000, notification information about a notification received from an external source (e.g., an external server) or a notification generated by the external device 2000. The electronic device 1000 that has obtained the notification information from the external device 2000 identifies the external device 2000 that has transmitted the notification information, based on pre-registered information about the external device 2000 or information about the external device 2000 that has been transmitted together with the notification information, but is unable to obtain location information of the external device 2000. Alternatively, the electronic device 1000 obtains location information of the external device 2000, but the location information of the external device 2000 may not include the distance from the electronic device 1000.

The electronic device 1000 may determine a second region where notification information is to be displayed, based on direction information included in presets or the location information, and display an affordance (e.g., for inducing a button input or a hand gesture input via a controller for switching to a VST mode) and the notification information in the second region.

When a user input for switching to a VST mode is obtained, the electronic device 1000 may display the whole or a partial region of the display in the VST mode. According to an embodiment of the present disclosure, when the distance to the external device 2000 is greater than the first threshold distance, the user needs to move in order to use the external device 2000. Accordingly, the electronic device 1000 may display the entire region of the display in the VST mode so as to allow the user wearing the electronic device 1000 to safely move to the location of the external device 2000.

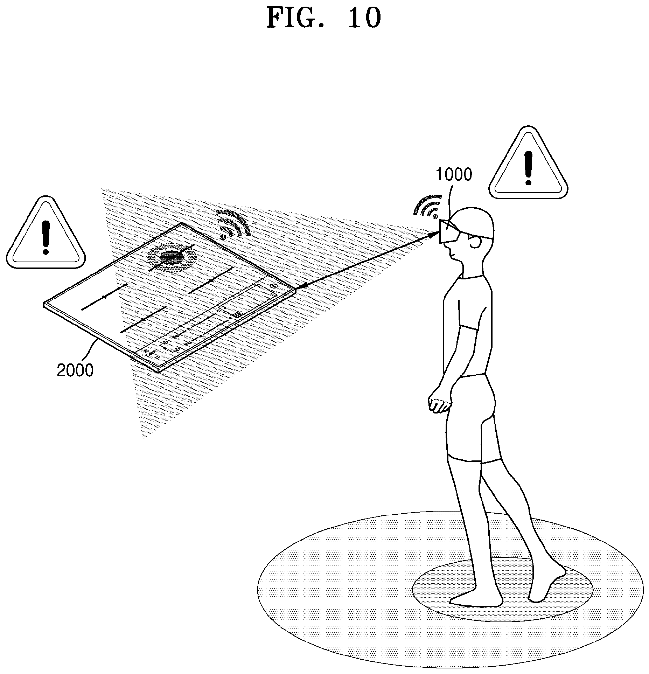

FIG. 10 is a diagram for describing an operation performed by an electronic device when receiving a high-priority notification from an external device, according to an embodiment of the present disclosure.

In the description of FIG. 10, redundant descriptions provided above with reference to FIGS. 5 to 9 may be briefly provided or omitted.

Referring to FIG. 10, it is assumed that the external device 2000 is located further away from the electronic device 1000 than a first threshold distance, and the electronic device 1000 is able to identify the location of the external device 2000.

The external device 2000 may transmit, to the electronic device 1000, notification information about a notification received from an external source (e.g., an external server) or a notification generated by the external device 2000. Here, the notification received by the external device 2000 or generated by the external device 2000 may have a higher priority than general notifications. For example, when an alert for informing of a disaster such as an earthquake or tsunami is received from the external device 2000 that is a mobile device, or an overheating warning is received from the external device 2000 that is a cooking appliance, an immediate response from the user is required.

The electronic device 1000 may display received notification information and an affordance in a second region, based on the urgency or priority of the notification information. For example, the electronic device 1000 may display the notification information and the affordance to be larger than those of general notifications, with difference colors, or to blink, to allow the user to recognize that the notification is an emergency notification.

When a user input for switching to a VST mode is obtained, the electronic device 1000 may display the whole or a partial region of the display in the VST mode. According to an embodiment of the present disclosure, when an emergency notification (e.g., an overheating alarm of a cooking appliance) is received from the external device 2000, an immediate response from the user is required, and thus, the electronic device 1000 may stop reproduction of VR content and display the entire region of the display in a VST mode such that the user may perform an interaction corresponding to the notification (e.g., powering off the cooking appliance).

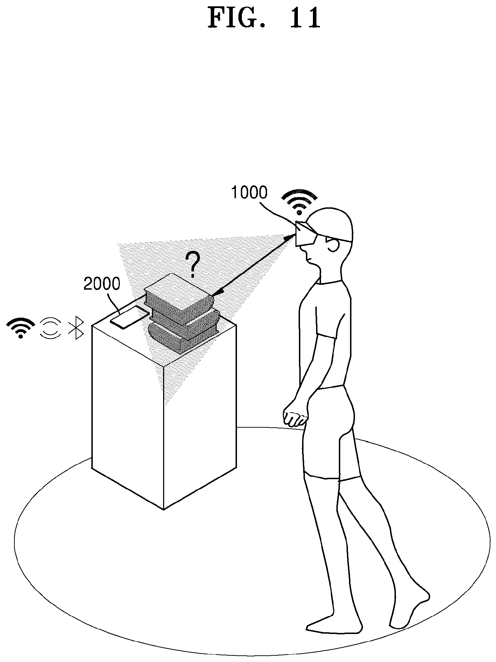

FIG. 11 is a diagram for describing a method, performed by an electronic device, of identifying the location of an external device and displaying information by using VST, according to an embodiment of the present disclosure.

In the description of FIG. 11, redundant descriptions provided above with reference to FIGS. 5 to 10 may be briefly provided or omitted.

Referring to FIG. 11, it is assumed that the external device 2000 is located within a first threshold distance from the electronic device 1000, but is unable to identify the location of the external device 2000 by using an external camera or sensor. Cases in which the electronic device 1000 is unable to identify the location of the external device 2000 may include a case in which the FOV is blocked by an obstacle or the like between the external device 2000 and the electronic device 1000.

The external device 2000 may transmit, to the electronic device 1000, notification information about a notification received from an external source (e.g., an external server) or a notification generated by the external device 2000. The electronic device 1000 that has obtained the notification information from the external device 2000 identifies the external device 2000 that has transmitted the notification information, based on pre-registered information about the external device 2000 or information about the external device 2000 that has been transmitted together with the notification information, but is unable to obtain location information of the external device 2000 by using an external camera or senor.

When the external device 2000 and the electronic device 1000 are connected to each other via short-range communication within the same space, the location of the external device 2000 may be obtained by using indoor positioning system (IPS) technology that uses short-range communication. Radio communication signals for IPS include Wi-Fi, Bluetooth Low Energy (BLE), radio-frequency identification (RFID), and ultra-wideband (UWB). By using the characteristics of these signals, such as the strength and transmission rate, and triangulation/trilateration methods, the location of a device that has transmitted radio communication signals may be measured.

In an environment where a wireless access point (AP) is installed, an IPS using Wi-Fi wireless local area network (WLAN) signals is easy to build its initial infrastructure and may be implemented at a low cost, but the signal strength and direction are unstable, resulting in low accuracy, and a relatively long waiting time may be required to connect to the AP.

A BLE-based IPS identifies a location by receiving a signal from a beacon, and may generally perform communication within 50 meters (m) with an accuracy of about 3 m to 8 m. The system may be initially configured at a low cost and is relatively easy to expand, but may be vulnerable to signal attenuation due to an obstacle and frequent interference with other communication signals.

UWB is evaluated as the most suitable type of signal for a IPS for wireless communication due to its short latency and high signal precision. It may reduce a positioning error to a level of 30 centimeters (cm). However, it requires separate infrastructure construction.

RFID technology is for transmitting and receiving data by using a reader and a tag. RFID-based location tracking is performed in a manner similar to Wi-Fi, where readers installed in various locations within an indoor space measure the strength of a signal from a tag to estimate an approximate location value.

In addition, in a case in which the electronic device includes a plurality of receiving antennas, the electronic device 1000 may identify the direction of a received signal and identify the direction of the external device 2000 based on the direction of the received signal.

The electronic device 1000 may determine a second region where the notification information is to be displayed, based on location information of the external device 2000 that is obtained through short-range communication, and display an affordance (e.g., for inducing a button input or a hand gesture input via a controller for switching to a VST mode) and the notification information in the second region. In addition, when a user input for switching to a VST mode is obtained, the electronic device 1000 may display the first region 1330 in the VST mode.

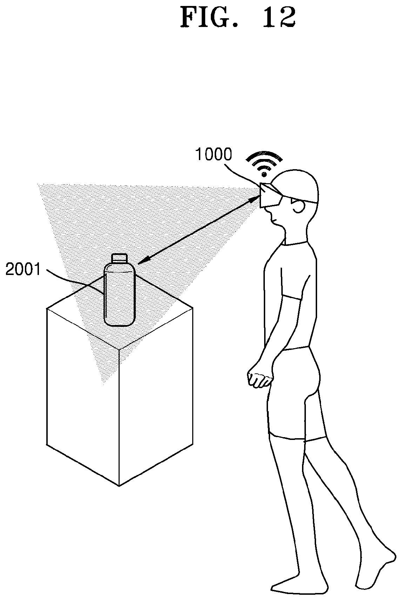

FIG. 12 is a diagram for describing a method, performed by an electronic device, of displaying VST based on object recognition, according to an embodiment of the present disclosure.

In the description of FIG. 12, redundant descriptions provided above with reference to FIGS. 5 to 11 may be briefly provided or omitted.

Referring to FIG. 12, the electronic device 1000 may analyze an external image captured by a camera to identify the presence of a pre-registered object from among objects included in the external image. For example, when the user wants to consume a beverage while using the electronic device 1000, the user may set an affordance to be displayed when an object corresponding to a beverage is recognized. The electronic device 1000 performs object recognition through image analysis while capturing an external image through an external camera during use of the electronic device 1000, according to user settings. When an object corresponding to a beverage set by the user is recognized during image analysis, the electronic device 1000 may obtain location information of the object through a camera or a vision sensor.

The electronic device 1000 may display notification information and an affordance in a second region of the display based on the location information of the object, and when a user input corresponding to the notification information is obtained, switch a first region to VST based on the location information of the object to display the object captured by the external camera in real time.

Object recognition through image analysis may classify objects based on a classification model. Classification models utilizing artificial intelligence technology may include discriminative models and generative models, and the generative model calculates the probability of a result being derived from input data based on the distribution of classes. An object may be detected by using a bounding box or a class probability map for a grid, through which the coordinates and size of the object may be obtained.

For an image containing only one object, object extraction may include a classification operation and a localization operation, and for an image containing a plurality of objects, object extraction may include a classification operation, an object detection operation, and a segmentation operation.

Classification is a process of recognizing one object with the largest proportion in one image and classifying its type according to defined classes. Object detection is a process of, when several objects exist in one image, classifying the characteristics and classes of each object and obtaining information about the type and location of each object in the form of a quadrangular box. Segmentation is a process of displaying the accurate shape of an object detected through object detection in units of pixels. Segmentation may include a process of extracting an outline of an object.

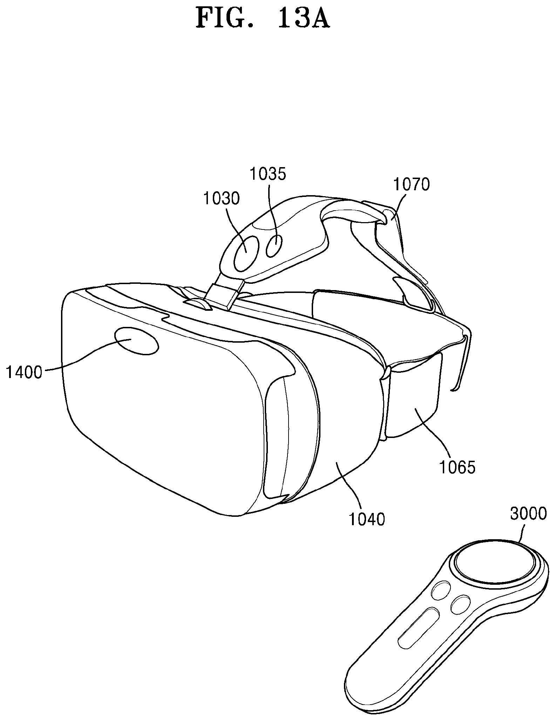

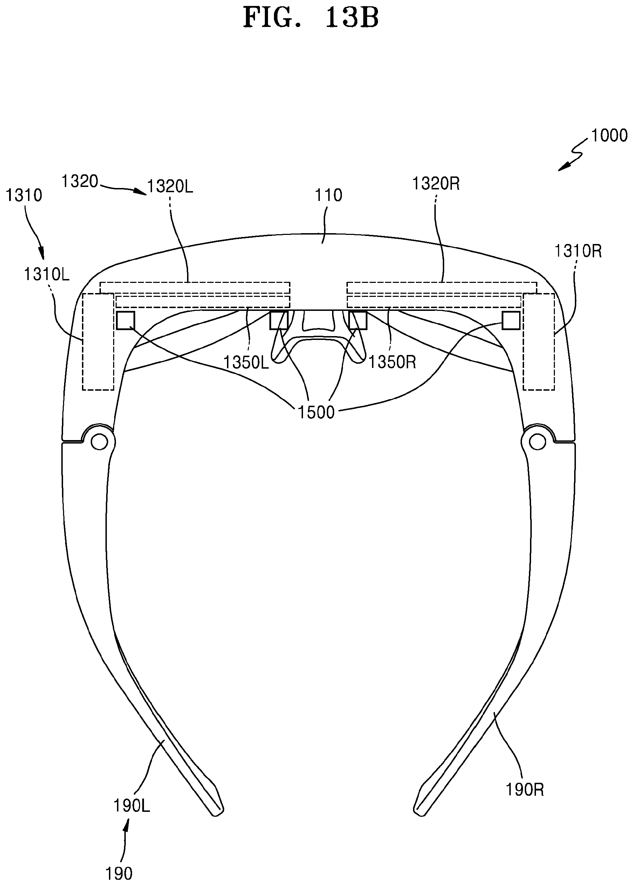

FIGS. 13A and 13B illustrate examples of electronic devices according to an embodiment of the present disclosure.

The electronic device 1000 according to an embodiment of the present disclosure may be, but is not limited to, a closed-view HMD device. The electronic device 1000 may be controlled by a separate control device 3000, and the electronic device 1000 and the control device 3000 may be connected to each other via short-range wireless communication or wired communication.

Referring to FIG. 13A, the HMD device 1000 may include a sensor unit 1030, a light-emitting unit 1035, a main body 1040, a side strap 1065, a central strap 1070, and an external camera 1400.

The sensor unit 1030 may include at least one sensor arranged to recognize and track an environment outside the HMD device 1000. Any suitable sensor technology may be used, including but not limited to tracking cameras, pressure sensors, temperature sensors, mechanical sensors, motion sensors, optical sensors, and electronic sensors.

The light-emitting unit 1035 may include at least one light-emitting device. Any suitable type of light-emitting device or light-emitting technology (e.g., infrared or light-emitting diode (LED)) may be used, and each light-emitting device may be located on any surface or portion of the HMD device 1000. In the HMD device 1000 according to an embodiment of the present disclosure, the light-emitting device may be located outside the electronic device 1000.

The main body 1040 may include a front surface and a rear surface.

The front surface of the main body 1040 may include a frontal plate. When the HMD device 1000 is worn by a user, the frontal plate and the main body 1040 may completely cover and obscure the user's eyes. Thus, the frontal plate and the main body 1040 may completely block ambient light from reaching the user's eyes, and as a result, the closed-view HMD device may completely control what the user sees.

The HMD device 1000 may also include various structures or mechanisms for fixing the HMD device to the user's face. For example, when the user wears the HMD device 1000, the HMD device 1000 may be fixed to the face with the side strap 1065 surrounding the user's head, as illustrated in FIG. 13A. The central strap 1070 may extend from the top of the main body 1040 of the HMD device 1000 to the top of the user's head. In an embodiment, the light-emitting unit 1035 may be fixed to a portion of the central strap.

The electronic device 1000 according to an embodiment of the present disclosure may be, but is not limited to, a glasses-type display device.

Referring to FIG. 13B, the glasses-type display device 1000 may include a glasses-shaped body configured to be worn by a user.

The glasses-shaped body may include a frame (or rim) 110 and a support 190, and the support 190 may extend from the frame 110 to be used to secure the display device on the user's head. The support 190 may include temples 190L and 190R and a nose support (not shown). The temples 190L and 190R may extend from the frame 110 to be used to fix the display device 1000 to the user's head at side portions of the glasses-shaped body. The nose support (not shown) may extend from the frame 110 to be used to secure the display device 1000 to the user's nose, and may include, but is not limited to, a nose bridge and a nose pad.

In addition, a display unit 1300 may be arranged in the frame 110, and the display unit 1300 may include a left-eye display unit 1300L and a right-eye display unit 1300R.

In addition, an optical engine 1380 of a projector to project display light containing an image may include a left-eye optical engine 1380L and a right-eye optical engine 1380R. The left-eye optical engine 1380L and the right-eye optical engine 1380R may be arranged on both sides of the display device 1000. Alternatively, one optical engine 1380 may be included in a central portion around the nose support of the display device 1000. Light emitted from the optical engine 1380 may be displayed through the display unit 1300.

A gaze tracking module 1500 may be arranged on a rim of a lens of the display device 1000, and may include, for example, a light-emitting unit configured to provide light toward the user's eyes and a light-receiving unit configured to receive the provided light. The light-emitting unit may provide light toward an eye region of the user while redirecting the light at predetermined time intervals. For example, light (e.g., infrared (IR) light) provided from the light source module may be projected onto the user's eyes in a predetermined pattern (e.g., a straight line in a vertical direction or a straight line in a horizontal direction). The gaze tracking module 1500 may track the user's gaze by identifying corneal regions and regions of the user's eyes by using an optical sensor, based on a change in the amount of light reflected from the eye region of the user.

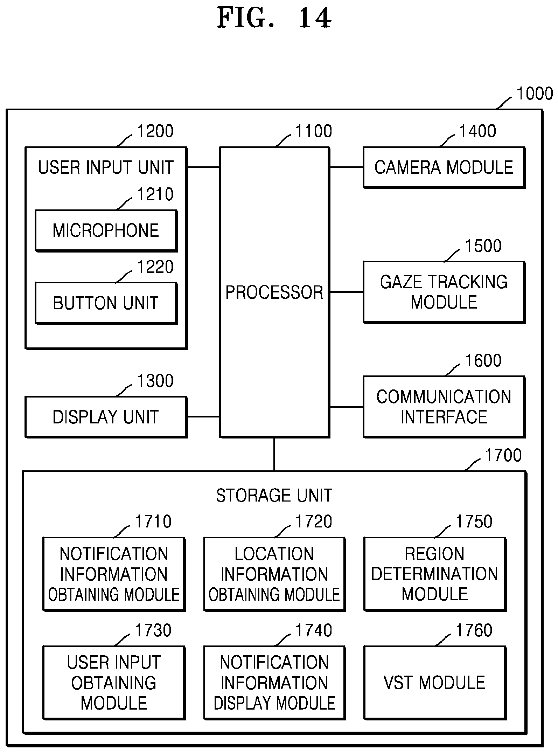

FIG. 14 is a block diagram of an electronic device according to an embodiment of the present disclosure.

Referring to FIG. 14, the electronic device 1000 according to an embodiment of the present disclosure may include a sensor unit, a user input unit 1200, the display unit 1300, a camera module 1400, the gaze tracking module 1500, a communication interface 1600, a storage unit 1700, and a processor 1100.

The user input unit 1200 refers to a unit for a user to input data for controlling the electronic device 1000, and may include a microphone 1210 and a button unit 1220.

The microphone 1210 receives an external audio signal and processes the received audio signal into electrical voice data. For example, the microphone 1210 may receive an audio signal from an external device or a speaker. Various denoising algorithms may be used for removing noise generated when the external audio signal is being received through the microphone 1210. The microphone 1210 may receive a voice input from the user for controlling the electronic device 1000.

The button unit 1220 may include, but is not limited to, at least one of a key pad, a dome switch, a touch pad (e.g., a touch-type capacitive touch pad, a pressure-type resistive overlay touch pad, an infrared sensor-type touch pad, a surface acoustic wave conduction touch pad, an integration-type tension measurement touch pad, a piezoelectric effect-type touch pad), a jog wheel, or a jog switch.

The display 1300 displays information processed by the electronic device 1000. For example, the display unit 1300 may display a user interface for capturing images of surroundings of the electronic device 1000, and information related to a service provided based on the captured images of the surroundings of the electronic device 1000.

According to an embodiment, the display unit 1300 may provide a VR image. As illustrated in FIG. 13B, the display unit 1300 may include the optical engine 1380. In a case in which the electronic device 1000 is a glasses-type device, the display unit 1300 may include a left display unit and a right display unit.

The camera module 1400 may capture images of the surroundings of the electronic device 1000. When an application that requires an image capturing function is executed, the camera module 1400 may obtain an image frame such as a still image or a moving image, through an image sensor. An image captured through the image sensor may be processed by a processor 1100 or a separate image processor (not shown). The camera module 1400 may include, for example, at least one of a rotatable red-green-blue (RGB) camera module or a plurality of depth camera modules, but is not limited thereto.

The sensor unit 1100 may detect an environment around the electronic device 1000. The sensor unit 1100 may include an acceleration sensor, a temperature sensor, a gyro sensor, a distance sensor (e.g., a RADAR or a LiDAR), an infrared sensor, and a UWB sensor.

The gaze tracking module 1500 may detect and track a gaze of a user wearing the electronic device 1000. The gaze tracking module 1500 may be arranged to face the user's eyes, and may detect a gaze direction of the left eye of the user and a gaze direction of the right eye of the user. Detecting a gaze direction of the user may include obtaining gaze information related to a gaze of the user.

In addition, information about an eye gaze of the user is information related to the eye gaze of the user, may be generated by analyzing sensor data, and may include, for example, information about the location of the user's pupils, the location of the center point between the pupils, the location of the center of the user's iris, the center of the user's eye, the location of a glint feature point of the user's eye, the user's gaze point, the user's gaze direction, and the like, but is not limited thereto. The gaze direction of the user may be, for example, the direction of a gaze from the center of an eye of the user toward a gaze point at which the user gazes. For example, the gaze direction of the user may be represented by a vector value from the center of the user's left eye toward the gaze point, and a vector value from the center of the user's right eye toward the gaze point, but is not limited thereto.

The communication interface 1600 may transmit and receive data for receiving a service related to the electronic device 1000, to and from an external device (not shown) and a server (not shown). The communication interface 1600 may include one or more components that enable communication between the electronic device 1000 and the server device (not shown), or between the electronic device 1000 and the external device (not shown). For example, the communication interface 1600 may include a short-range communication unit and a broadcast receiving unit.

The short-range wireless communication unit may include, but is not limited to, a Bluetooth communication unit, a BLE communication unit, a near-field communication unit, a Wi-Fi communication unit, a Zigbee communication unit, an Infrared Data Association (IrDA) communication unit, a Wi-Fi Direct (WFD) communication unit, a UWB communication unit, an Ant+ communication unit, and the like.

The broadcast receiving unit receives a broadcast signal and/or broadcast-related information from the outside via a broadcast channel. The broadcast channel may include a satellite channel and a terrestrial channel. According to an embodiment, the electronic device 1000 may not include the broadcast receiving unit.

The communication interface 1600 may obtain content from an external device (not shown). The communication interface 1600 may obtain content from the external device (not shown) via wired or wireless communication. Here, the external device (not shown) may include, but is not limited to, a server device, a mobile terminal, a wearable device (e.g., a watch, a band, glasses, or a mask), a home appliance (e.g., a television (TV), a desktop personal computer (PC), a notebook computer, a digital video disc (DVD) device, a washing machine, or a refrigerator). The content may include multimedia files, video files, and audio files.

The storage unit 1700 may store a program to be executed by the processor 1800 to be described below, and may store data input to or output from the electronic device 1000.

The storage unit 1700 may include at least one of an internal memory (not shown) and an external memory (not shown). The internal memory may include, for example, at least one of a volatile memory (e.g., dynamic random-access memory (DRAM), static RAM (SRAM), synchronous DRAM (SDRAM), etc.), a non-volatile memory (e.g., one-time programmable read-only memory (OTPROM), programmable ROM (PROM), erasable programmable ROM (EPROM), electrically erasable programmable ROM (EEPROM), mask ROM, flash ROM, etc.), a hard disk drive (HDD), or solid-state drive (SSD). According to an embodiment, the processor 1800 may load a command or data received from at least one of the non-volatile memory or other components into a volatile memory, and process the command or data. In addition, the processor 1800 may store, in the non-volatile memory, data received from other components or generated by the processor 1800. The external memory may include, for example, at least one of CompactFlash (CF), Secure Digital (SD), Micro-SD, Mini-SD, eXtreme Digital (xD), or Memory Stick.

Programs stored in the storage unit 1700 may be classified into a plurality of modules according to their functions, and may include, for example, a notification information obtaining module 1710, a location information obtaining module 1720, a user input obtaining module 1730, a notification information display module 1740, a region determination module 1750, and a VST module 1760.

The processor 1800 controls the overall operation of the electronic device 1000. For example, the processor 1800 may execute programs stored in the storage unit 1700 to control the overall operation of the sensor unit 1100, the user input unit 1200, the display unit 1300, the camera module 1400, the gaze tracking module 1500, the communication interface 1600, the storage unit 1700, and the like.

The processor 1800 may display a notification received from an external device and display the notification by using VST, by executing the notification information obtaining module 1710, the location information obtaining module 1720, the user input obtaining module 1730, the notification information display module 1740, the region determination module 1750, and the VST module 1760 that are stored in the storage unit 1700.

According to an embodiment, the electronic device 1000 may include a plurality of processors 1800, and the notification information obtaining module 1710, the location information obtaining module 1720, the user input obtaining module 1730, the notification information display module 1740, the region determination module 1750, and the VST module 1760 may be executed by the plurality of processors 1800.

The processor 1800 may executing the notification information obtaining module 1710 stored in the storage unit 1700 to obtain notification information received from the external device 2000. The notification information may include identification information of the external device 2000, the type of notification, a notification icon, a display method, or the content of a notification. The identification information of the external device may include at least one of the type, manufacturer, model, serial number, and identifier of the external device. The type of notification may include information about an application that has generated the notification on the external device 2000, whether the notification requires a user response, and the importance of the notification.

The processor 1800 may executing the location information obtaining module 1720 stored in the storage unit 1700 to obtain location information of the external device 2000. The location information of the external device 2000 may include information about the direction of the external device 2000 with respect to the electronic device 1000, and information about the distance between the electronic device 1000 and the external device 2000.

The processor 1800 may execute the user input obtaining module 1730 stored in the storage unit 1700 to obtain a user input indicating whether to display a particular region of the display 1300 by using VST in response to an affordance. The user input may be input through an input unit of the electronic device 1000 or through a control device (e.g., a joystick or a separate input device) that is linked to the electronic device 1000. The user input may include various forms of input through various user interfaces, such as voices, motions, or gazes, in addition to an input through physical buttons, touch screen, or the like provided on the electronic device 1000 or a control device linked to the electronic device 1000.

The processor 1800 may execute the notification information display module 1740 stored in the storage unit 1700 to display the notification information in a second region of the display. The notification information may include identification information of the external device 2000, the type of notification, a notification icon, a display method, or the content of a notification. The identification information of the external device may include at least one of the type, manufacturer, model, serial number, and identifier of the external device. The type of notification may include information about an application that has generated the notification on the external device 2000, whether the notification requires a user response, and the importance of the notification.

The processor 1800 may execute the region determination module 1750 stored in the storage unit 1700 to determine the location and size of a first region and the second region based on the location information of the external device 2000. The location and size of the first region and the second region may be dynamically determined based on real-time location information of the external device 2000.

The processor 1800 may execute the VST module 1760 stored in the storage 1700 to display the first region of the display 1300 by using VST. The VST module 1760 may display, in the first region, real-time external images captured through the camera module 1400 in real time, so as to allow the user wearing the electronic device 1000 to perform daily activities and interact with the external device 2000.

According to an embodiment of the present disclosure, a method, performed by an electronic device, of displaying a notification from an external device may include obtaining notification information from the external device. According to an embodiment of the present disclosure, the method, performed by an electronic device, of displaying a notification from an external device may obtain location information of the external device. According to an embodiment of the present disclosure, the method, performed by an electronic device, of displaying a notification from an external device may determine a location and a size of a first region of a display to be displayed by using VST, based on the obtained location information of the external device. According to an embodiment of the present disclosure, the method, performed by an electronic device, of displaying a notification from an external device may display the first region by using the VST.

According to an embodiment of the present disclosure, the method, performed by an electronic device, of displaying a notification from an external device may include displaying the notification information in the second region based on the location information of the external device. In addition, according to an embodiment of the present disclosure, the method, performed by an electronic device, of displaying a notification from an external device may include, in response to the notification information being displayed, obtaining a user input for switching to the VST.

According to an embodiment of the present disclosure, the method, performed by an electronic device, of displaying a notification from an external device may further include determining a location and a size of the second region based on the location information of the external device.

According to an embodiment of the present disclosure, in the method, performed by an electronic device, of displaying a notification from an external device, the location and the size of the first region may be dynamically determined based on a location of the external device and a distance between the electronic device and the external device, which are obtained at predetermined intervals.

According to an embodiment of the present disclosure, in the method, performed by an electronic device, of displaying a notification from an external device, based on the distance between the electronic device and the external device being less than or equal to a predetermined first threshold value, the size of the first region is determined in inverse proportion to the distance between the AR device and the external device.

According to an embodiment of the present disclosure, in the method, performed by an electronic device, of displaying a notification from an external device, based on the distance between the electronic device and the external device being greater than the first threshold value, the size of the first region may be determined to be equal to a size of the display.

According to an embodiment of the present disclosure, in the method, performed by an electronic device, of displaying a notification from an external device, the size of the first region may be determined based on a priority of the notification information.

According to an embodiment of the present disclosure, an electronic device for displaying a notification from an external device may include: a display; a storage unit storing a program comprising at least one instruction; and at least one processor configured to execute the at least one instruction stored in the storage unit. According to an embodiment of the present disclosure, in the electronic device for displaying a notification from an external device, the at least one processor may execute the at least one instruction to obtain notification information from the external device. According to an embodiment of the present disclosure, in the electronic device for displaying a notification from an external device, the at least one processor may execute the at least one instruction to obtain location information of the external device. According to an embodiment of the present disclosure, in the electronic device for displaying a notification from an external device, the at least one processor may execute the at least one instruction to determine a location and a size of a first region of the display to be displayed by using the VST, based on the obtained location information of the external device. According to an embodiment of the present disclosure, in the electronic device for displaying a notification from an external device, the at least one processor may execute the at least one instruction to display the first region by using the VST.

According to an embodiment of the present disclosure, in the electronic device for displaying a notification from an external device, the at least one processor may display the notification information in a second region based on the location information of the external device. In addition, according to an embodiment of the present disclosure, in the electronic device for displaying a notification from an external device, the at least one processor may, in response to the notification information being displayed, obtain a user input for switching to the VST.

According to an embodiment of the present disclosure, in the electronic device for displaying a notification from an external device, the at least one processor may determine a location and a size of the second region based on the location information of the external device.

According to an embodiment of the present disclosure, in the electronic device for displaying a notification from an external device, the at least one processor may dynamically determine the location and the size of the first region based on a location of the external device and a distance between the electronic device and the external device, which are obtained at predetermined intervals.

According to an embodiment of the present disclosure, in the electronic device for displaying a notification from an external device, the at least one processor may, based on the distance between the electronic device and the external device being less than or equal to a first threshold value, determine the size of the first region in inverse proportion to the distance between the AR device and the external device.

According to an embodiment of the present disclosure, in the electronic device for displaying a notification from an external device, the at least one processor may, based on the distance between the electronic device and the external device being greater than the first threshold value, determine the size of the first region to be equal to a size of the display.

According to an embodiment of the present disclosure, in the electronic device for displaying a notification from an external device, the at least one processor may determine the size of the first region based on a priority of the notification information.

In addition, according to an embodiment of the present disclosure, provided is a computer-readable recording medium having recorded thereon a program for executing the above-described method.

A machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the 'non-transitory storage medium' may include a buffer in which data is temporarily stored.

According to an embodiment, methods according to various embodiments disclosed herein may be included in a computer program product and then provided. The computer program product may be traded as commodities between sellers and buyers. The computer program product may be distributed in the form of a machine-readable storage medium (e.g., a compact disc ROM (CD-ROM)), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

## Claims

1. A method, performed by an electronic device (1000), of displaying a notification from an external device (2000), the method comprising:
obtaining notification information from the external device (501);
obtaining location information of the external device (502);
determining a location and a size of a first region of a display to be displayed by using video see-through (VST), based on the obtained location information of the external device (503); and
displaying the first region by using the VST (504).

2. The method of claim 1, further comprising:
displaying the notification information in a second region based on the location information of the external device (604); and
in response to the notification information being displayed, obtaining a user input for switching to the VST (605).

3. The method of the claim 2, further comprising determining a location and a size of the second region based on the location information of the external device (603).

4. The method of any one of claims 1 to 3, wherein the location and the size of the first region are dynamically determined based on a location of the external device and a distance between the electronic device and the external device, which are obtained at predetermined intervals (608).

5. The method of any one of claims 1 to 3, wherein, based on the distance between the electronic device and the external device being less than or equal to a predetermined first threshold value, the size of the first region is determined in inverse proportion to the distance between the augmented reality (AR) device and the external device.

6. The method of any one of claims 1 to 5, wherein, based on the distance between the electronic device and the external device being greater than the first threshold value, the size of the first region is determined to be equal to a size of the display.

7. The method of any one of claims 1 to 6, wherein the size of the first region is determined based on a priority of the notification information.

8. An electronic device for displaying a notification from an external device, the electronic device comprising:
a display (1300);
a storage unit (1700) storing a program comprising at least one instruction; and
at least one processor (1800) configured to execute the at least one instruction stored in the storage unit to obtain notification information from the external device (501), obtain location information of the external device (502), determine a location and a size of a first region of the display to be displayed by using video see-through (VST), based on the obtained location information of the external device (503), and display the first region by using the VST (504).

9. The electronic device of claim 8, wherein the at least one processor (1800) is further configured to display the notification information in a second region based on the location information of the external device (604), and
in response to the notification information being displayed, obtain a user input for switching to the VST (605).

10. The electronic device of claim 9, wherein the at least one processor (1800) is further configured to determine a location and a size of the second region based on the location information of the external device (603).

11. The electronic device of any one of claims 8 to 10, wherein the at least one processor (1800) is further configured to dynamically determine the location and the size of the first region based on a location of the external device and a distance between the electronic device and the external device, which are obtained at predetermined intervals (608).

12. The electronic device of any one of claims 8 to 11, wherein the at least one processor (1800) is further configured to, based on the distance between the electronic device and the external device being less than or equal to a first threshold value, determine the size of the first region in inverse proportion to the distance between the AR device and the external device.

13. The electronic device of any one of claims 8 to 12, wherein the at least one processor (1800) is further configured to, based on the distance between the electronic device and the external device being greater than the first threshold value, determine the size of the first region to be equal to a size of the display.

14. The electronic device of any one of claims 8 to 13, wherein the at least one processor (1800) is further configured to determine the size of the first region based on a priority of the notification information.

15. A computer-readable recording medium having recorded thereon a program for causing a computer to perform the method of any one of claims 1 to 7.
